# EUROPEAN PATENT SPECIFICATION

(11) **EP 3 726 865 B1**
(45) Date of publication and mention of the grant of the patent: **29.03.2023**
(21) Application number: 18887313.7
(22) Date of filing: 04.12.2018
(51) Int. Cl.: H04W 12/0431, H04W 12/084, G07C 9/00, B60R 25/24, H04W 12/069, H04W 4/40

(54) **METHOD AND SYSTEM FOR GENERATING AND USING VIRTUAL KEY OF VEHICLE**
VERFAHREN ZUR ERZEUGUNG UND VERWENDUNG EINES VIRTUELLEN FAHRZEUGSCHLÜSSELS UND SYSTEM DAFÜR
PROCÉDÉ DE GÉNÉRATION ET D'UTILISATION DE CLÉ VIRTUELLE DE VÉHICULE ET SYSTÈME CORRESPONDANT

(30) Priority: 15.12.2017 CN 201711345986
(43) Date of publication of application: 21.10.2020
(73) Proprietor: NIO (Anhui) Holding Co., Ltd., Hefei City, Anhui Province (CN)
(72) Inventor: ZHU, Hao, Anting, Jiading, Shanghai (CN); ZENG, Jieyu, Anting, Jiading, Shanghai (CN); SONG, Liqiao, Anting, Jiading, Shanghai (CN); WANG, Huan, Anting, Jiading, Shanghai (CN); MA, Xiaohui, Anting, Jiading, Shanghai (CN); WENG, Yujian, Anting, Jiading, Shanghai (CN)
(74) Representative: Vossius & Partner Patentanwälte Rechtsanwälte mbB
(86) International application number: PCT/CN2018/119115
(87) International publication number: WO 2019/114578

(56) References cited:
- CN-A- 104 869 148
- CN-A- 107 393 079
- CN-A- 107 516 365
- US-A1- 2016 203 661
- US-A1- 2017 236 343
- US-A1- 2017 330 402
- SCHNEIER B ED - SCHNEIER B: "APPLIED CRYPTOGRAPHY, SECOND EDITION", 1996, APPLIED CRYPTOGRAPHY : PROTOCOLS, ALGORITHMS AND SOURCE CODE IN C, JOHN WILEY & SONS, NEW YORK [U.A.], PAGE(S) 51, XP002912060, ISBN: 978-0-471-11709-4 * page 51 *

## Description

### Technical Field

The invention relates to vehicle control technologies, and in particular to a method and system for generating and using a virtual key of a vehicle

### Background Art

The mobile phone is a device that each user carries in current life. If the problem of keys can be solved through technical means, the user can take fewer personal belongings, and a service person of a company can use a vehicle without disturbing the user.

However, in most of the currently available methods for unlocking a vehicle with a mobile phone, a remote control method through a network is used (e.g., shared cars). This solution needs to rely on the network. If the vehicle is parked in an underground garage, a trailer should be called for rescue. Use scenarios and user experience become worse.

US 2017/236343 A1 to regulating vehicle access via cryptographically-secured vehicle access certificate signing requests. US 2017/330402 A1 relates to the control of functionalities of a motor vehicle by means of a mobile terminal. US 2016/203661 A1 relates to controlling access to vehicles among a plurality of users.

### Summary of the Invention

In view of the problems, the invention aims to propose a method and system for generating and using a virtual key of a vehicle, which can realize personalized authorization and can support secure transmission of unlocking without networking. The invention is defined by independent claims 1 and 8. Further embodiments of the invention are defined by the dependent claims.

As described above, the method and system for generating and using a virtual key of a vehicle according to the invention do not rely on a network during an unlocking process, and can be used normally in an underground garage and the like without a network. Moreover, a vehicle owner, relatives and friends authorized by the vehicle owner, or a service person managed by a telematics service provider can hold different keys, thereby distinguishing between use times, use rights, etc. Specifically, the vehicle owner can use a virtual key, or the vehicle owner can authorize relatives and friends to use virtual keys and grant them certain permissions, or the telematics service provider can authorize a service person to perform customized operations within a specific time period, for example, an express-to-vehicle service can allow a courier to open the trunk door only within a time range of delivery, a battery swap worker is authorized to perform a battery swap operation, and others are allowed to temporarily use the vehicle in scenarios of valet parking and the like.

Moreover, the key is randomly encrypted during transmissions, so the virtual key will not be monitored, tampered, copied, or subjected to replay attacks during each transmission.

### Brief Description of the Drawings

FIG. 1 is a schematic flowchart of a method for generating and using a virtual key of a vehicle according to one implementation of the invention.
FIG. 2 is a flowchart of a key generation step in the method for generating and using a virtual key of a vehicle according to the invention.
FIG. 3 is a flowchart of a key encryption step in the method for generating and using a virtual key of a vehicle according to the invention.
FIG. 4 is a schematic structural diagram of a system for generating and using a virtual key of a vehicle according to one implementation of the invention.
FIG. 5 is a schematic structural diagram of a system for generating and using a virtual key of a vehicle

### Detailed Description of Embodiments

The following introduces some of multiple embodiments of the invention and is intended to provide a basic understanding of the invention. It is not intended to confirm the key or decisive elements of the invention or limit the scope of protection.

First, a method for generating and using a virtual key of a vehicle according to one implementation of the invention will be described.

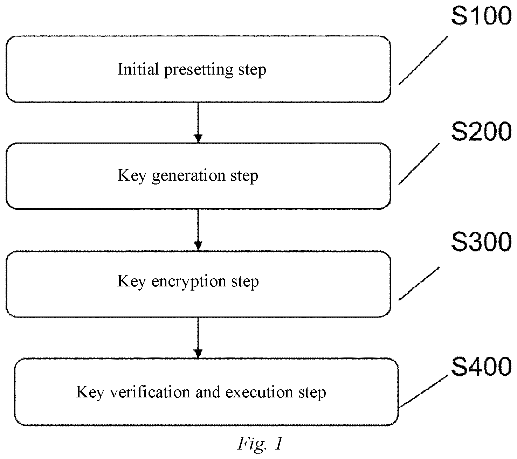

FIG. 1 is a schematic flowchart of a method for generating and using a virtual key of a vehicle according to one implementation of the invention.

As shown in FIG. 1, the method for generating and using a virtual key of a vehicle according to one implementation of the invention mainly comprises four steps: an initial presetting step S 100; a key generation step S200; a key encryption step S300; and a key verification and execution step S400.

First, the initial presetting step S 100 will be described.

An onboard communication control module is preset with an independent private key of each vehicle that is asymmetrically encrypted, and the private key is stored in a secure storage area of the onboard communication control module. The onboard communication control module further needs to be preset with a public key used by a backend system for signing, to verify data sent from the backend system.

In the text of this application, a user terminal may be a mobile terminal (or Pad) held by a vehicle owner or a mobile terminal (or Pad) held by a current user (e.g., the vehicle owner's family, friend, etc.) who has been authorized by the vehicle owner to use the vehicle, that is to say, the user here does not necessarily refer only to the vehicle owner.

In the invention, a user equipment certificate and a token are preset in the user terminal and used by the backend system to verify the identity.

The backend system is preset with a public key for all vehicle certificates (no private key is stored) and a pair of certificates for data signing.

Next, the key generation step S200 will be described.

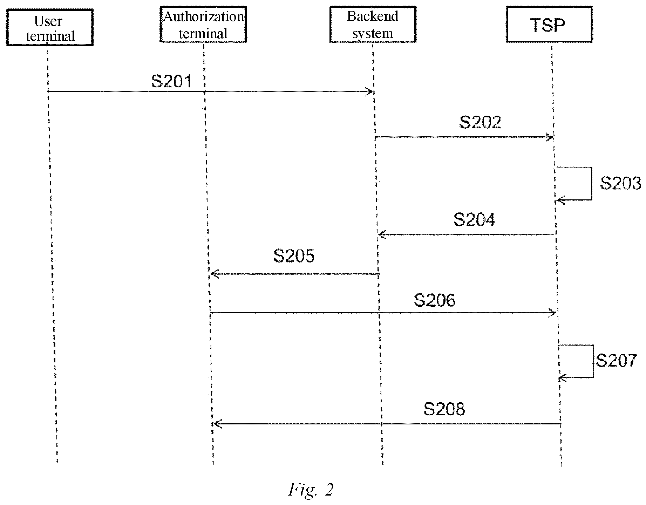

FIG. 2 is a flowchart of a key generation step in the method for generating and using a virtual key of a vehicle according to the invention.

The process shown in FIG. 2 is implemented by a user terminal, an authorization terminal, a backend system, and a TSP.

The user terminal is as described above. The authorization terminal is a mobile terminal held by an authorized person who needs to be authorized by the vehicle owner. For example, when the vehicle owner lends the vehicle to others for using, the authorization terminal is a mobile terminal of a person who borrows the vehicle. When the vehicle owner authorizes a courier to open the trunk lock, the authorization terminal is a mobile terminal of the courier.

The backend system may be a backend platform of cloud, service or after-sales systems, a back end of a distribution system, or a user authorization service in a telematics service provider (TSP). Therefore, in the application of the invention, the backend system and the TSP may be arranged separately, or the both can be used together as a background server. In implementations of the description, the separately arranged backend system and TSP are used as an example for description, but the invention is not limited thereto.

As shown in FIG. 2, in step S201, a request for generating a virtual key is sent from the user terminal to the backend system. The request comprises at least authorized list information, and the authorized list information may comprise, for example, an identifier of an authorized device, an authorized permission, start and end times of authorization, etc.

In step S202, after receiving the request for generating the virtual key from the user terminal, the backend system sends a request for generating the virtual key to the TSP, the request comprising at least a user ID (i.e., a vehicle owner ID), a target vehicle ID, and the authorized list information.

In step S203, the TSP determines whether the request from the backend system is valid (for example, determining, based on the user ID and the target vehicle ID, whether the user can use the target vehicle), and generates a unique authorization ID if the request is valid, wherein the authorization ID is used to identify current authorization.

In step S204, the TSP feeds back the authorization ID and an index of the virtual key (as the index of the virtual key, which is described below by using an example in which the index of the virtual key is a URL of the virtual key, and certainly, other forms of indexes may also be used in addition to the URL, and the URL here is merely an example, and does not impose any limitation to the invention) to the backend system.

In step S205, the backend system feeds back the authorization ID and the URL of the virtual key URL to the authorization terminal.

In step S206, the authorization terminal invokes the virtual key from the TSP based on the URL of the virtual key, the invocation comprising at least the authorization ID, a device ID, a user equipment certificate, and a token.

In step S207, the TSP verifies the invocation information from the authorization terminal, and generates the virtual key based on a public key if the verification succeeds, or else rejects the request. Generating the virtual key based on the public key means signing the user ID, the vehicle ID, the device ID, the authorized list information and the like with the public key.

In step S208, the generated virtual key is returned to the authorization terminal, and the authorization terminal stores the virtual key and related information.

Next, the key encryption step S300 will be described.

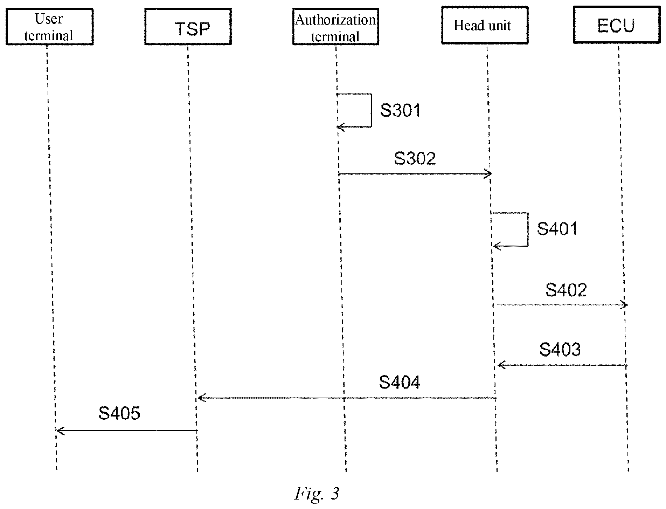

FIG. 3 is a flowchart of a key encryption step and a key verification and execution step in the method for generating and using a virtual key of a vehicle according to the invention.

The process shown in FIG. 3 is implemented by a user terminal, a TSP, an authorization terminal, a head unit, and an electronic control unit (ECU).

The functions implemented by the head unit and the ECU described in the description are equivalent to the functions implemented by an "onboard communication control module" in the claims. In the description, the head unit and the ECU are illustrated separately as two modules. Actually, the head unit and the ECU may also be implemented as one module (i.e., the "onboard communication control module").

First, the key encryption step comprises step S301 and step S302.

As shown in FIG. 3, in step S301, the authorization terminal randomly generates an AES key and an initial vector (IV); encrypts the AES and the IV with a public key according to an elliptic curves cryptography (ECC) algorithm; encrypts a virtual key with the AES and the IV, specifically, encrypting access information access info (e.g., user information, permission, and role), a signature of the access information access_sig and a certificate of the virtual key virtualkey _cert with the AES and the IV; acquires a device ID and a time stamp t1 of the authorization terminal; and sign the information with a user equipment certificate and a token. It can be seen that in communication between the authorization terminal and the head unit, data is encrypted with a symmetric encryption algorithm, and then the key encrypted symmetrically is encrypted with an asymmetric encryption algorithm, which can greatly improve an arithmetic speed while ensuring security.

In step S302, the signed information is sent to the head unit.

Next, the key verification and execution step comprises: step S401 to step S405.

In step S401, the head unit performs the following steps to read, decrypt and verify the virtual key:
(1) reading the time stamp t1 (i.e., the time stamp t1 of the authorization terminal that is comprised in the above signed information and generated in step S301), acquiring a current time stamp t2, and determining whether a difference between t1 and t2 is less than a maximum clock synchronization error;
(2) reading signed encryption data;
(3) performing decryption with a private key preset at the head unit to acquire the AES and the IV;
(4) decrypting the virtual key with the AES and the IV to obtain the access information access_info, the signature of the access information access _sig and the certificate of the virtual key virtualkey_cert; and
(5) verifying the certificate of the virtual key virtualkey_cert (for example, verifying whether the sent certificate virtualkey_cert is valid and whether the certificate is in a valid time) and the access information access _info, comprising, for example:
   verifying start time and end times of the access;
   verifying the valid time of the certificate of the virtual key virtualkey_cert;
   verifying whether the vehicle ID in the access information is consistent with a preset vehicle ID, so as to verify the current vehicle, which can prevent someone having a real virtual key from using a vehicle that does not correspond to the virtual key;
   verifying whether the device ID in the access information is consistent with a preset device ID, so as to verify a device ID of a mobile terminal sending the virtual key, which can prevent the virtual key from being copied to other mobile terminal for using because each key is bound with a mobile terminal;
(6) verifying the signature of the above information with the public key; and
(7) verifying, with a public key of a signer, whether the access information (access_info) matches the signature of the access information.

If all verifications succeed, the process proceeds to step S402.

In step S402, an instruction related to the virtual key is sent to the ECU and the ECU performs a corresponding operation, for example, unlocking the trunk in the scenario of receiving an express, or enabling a parking person to move the vehicle in the scenario of valet parking, etc.

In step S403, the ECU returns a command execution result to the head unit.

In step S404, the head unit reports an instruction result to the TSP.

In step S405, the TSP notifies the user terminal.

In step S401, the head unit checks freshness of a time stamp, thereby preventing replay attacks.

Next, a variant of the method for generating and using a virtual key of a vehicle according to the invention will be described.

In this variant, the vehicle applies to the backend system or the TSP for a specified service request, and then the backend system or the TSP assigns a corresponding permission to others according to the specified service request, for example, assigning a permission to a charging worker, a repairman, etc., so that others can use relevant functions of the vehicle with the virtual key.

The following variant is described with the situation of applying to the TSP for a specified service as an example, and the situation of applying to the backend system for a specified service is similar to this.

In addition, steps of the variant are substantially the same as those of the above implementation, and the only difference lies in the key generation step. The details are as follows:
The method for generating and using a virtual key of a vehicle in the variant is implemented by a user terminal, an authorization terminal, a TSP, a backend system, a head unit and an ECU, and comprises the following steps:
an initial presetting step in which relevant keys and/or certificates are preset in the head unit, the user terminal and the TSP;
a key generation step in which the user terminal sends a specified request to the TSP via the backend system, the TSP determines whether the specified request is valid, and if the specified request is valid, the TSP distributes a URL of a virtual key that corresponds to the specified request to the corresponding authorization terminal specified by the TSP, the authorization terminal invokes the virtual key from the TSP based on the URL of the virtual key, the TSP verifies the invocation information from the authorization terminal, and if the verification succeeds, the TSP generates the virtual key and returns the generated virtual key to the authorization terminal;
a key encryption step in which the authorization terminal randomly generates specified parameters, encrypts the virtual key based on the specified parameters, and sends the encrypted virtual key to the head unit; and
a key verification and execution step in which the head unit reads, decrypts and verifies the virtual key, and sends an instruction related to the virtual key to the ECU when the verification succeeds, and the ECU executes the instruction related to the virtual key, for example, allowing a charging worker to perform various operations related to charging in the scenario where the TSP assigns a corresponding permission to the charging worker, or allowing a repairman to perform various operations related to repair in the scenario where the TSP assigns a corresponding permission to the repairman.

Further, another variant of the method for generating and using a virtual key of a vehicle that does not fall within the scope of the claims will be described for illustration purposes.

In this variant, the vehicle owner authorizes a virtual key to himself/herself. In this case, the vehicle owner does not need to carry a physical key when traveling, which can reduce personal belongings. Compared with the above method for generating and using a virtual key of a vehicle, an authorization process is reduced in this variant.

Specifically, the method for generating and using a virtual key of a vehicle in this variant is implemented by a user terminal, a TSP, a backend system, a head unit and an ECU, and specifically comprises the following steps:
an initial presetting step in which relevant keys and/or certificates are preset in the head unit, the user terminal and the TSP;
a key generation step in which the user terminal sends, via the backend system, a request for generating a virtual key to the TSP, and the TSP determines whether the request for generating the virtual key is valid, and if the request is valid, the virtual key is returned to the user terminal via the backend system;
a key encryption step in which the user terminal randomly generates specified parameters, encrypts the virtual key based on the specified parameters, and sends the encrypted virtual key to the head unit; and
a key verification and execution step in which the head unit reads, decrypts and verifies the virtual key, and sends an instruction related to the virtual key to the ECU when the verification succeeds, and the ECU executes the instruction related to the virtual key.

The method for generating and using a virtual key of a vehicle according to the invention is described above. Then, a system for generating and using a virtual key of a vehicle according to the invention will be described.

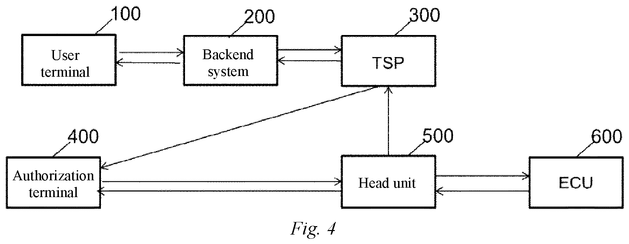

FIG. 4 is a schematic structural diagram of a system for generating and using a virtual key of a vehicle according to one implementation of the invention.

As shown in FIG. 4, the system for generating and using a virtual key of a vehicle according to one implementation of the invention comprises:
a user terminal 100 configured to generate a request for a virtual key and send the request to a TSP 300 described below via a backend system described below;
the backend system 200 configured to transmit data among the user terminal 100, an authorization terminal 400 described below and the TSP 300 described below;
the TSP 300 configured to determine whether the received request for generating the virtual key is valid, generate a URL of the virtual key when it is determined that the request is valid, and send the URL of the virtual key to the authorization terminal 400 described below via the backend system 200, and also configured to verify a request for invoking the virtual key from the authorization terminal 400, generate the virtual key when the verification succeeds, and return the virtual key to the authorization terminal 400 described below;
the authorization terminal 400 configured to initiate, to the TSP 300 based on the URL of the virtual key, the request for invoking the virtual key, encrypt, with specified parameters generated randomly, the virtual key returned from the TSP 300, and send the encrypted virtual key to a head unit 500 described below;
the head unit 500 configured to read, decrypt and verify the received virtual key, and send an instruction related to the virtual key to an ECU 600 described below if the verification succeeds; and
the ECU 600 configured to execute the instruction related to the virtual key.

The functions implemented by the head unit 500 and the ECU 600 described in the description are equivalent to the functions implemented by an "onboard communication control module" in the claims. In the description, the head unit 500 and the ECU 600 are illustrated separately. Actually, the head unit 500 and the ECU 600 may also be implemented as one module (i.e., the "onboard communication control module").

The head unit 600 is preset with an independent private key of each vehicle and a public key, the user terminal 100 is preset with a user equipment certificate and a token, and the TSP 300 is preset with a public key for all vehicle certificates and certificates.

Data is transmitted between the authorization terminal 400 and the head unit 500 in short-distance transmission modes such as NFC and Bluetooth.

Next, a variant of the system for generating and using a virtual key of a vehicle according to the invention will be described.

In this variant, the vehicle applies to the backend system or the TSP (the case of applying to the TSP is described below) for a specified service request, and then the backend system or the TSP assigns a corresponding permission to others such as a charging worker or a repairman according to the specified service request, such that the others can use the virtual key.

The structure of this variant is substantially the same as that of the above implementation, and the only difference lies in permission assignment of the TSP. The details are as follows:
The system for generating and using a virtual key of a vehicle in this variant is characterized by comprising:
a user terminal configured to generate a specified request and send the specified request to a TSP described below via a backend system described below;
the backend system configured to transmit data among the user terminal, an authorization terminal described below and the TSP described below;
the TSP configured to determine whether the received specified request is valid, and when it is determined that the specified request is valid, distribute a URL of a virtual key that corresponds to the specified request to the corresponding authorization terminal assigned by the TSP, and also configured to verify a request for invoking the virtual key from the authorization terminal, generate the virtual key when the verification succeeds, and return the virtual key to the authorization terminal;
the authorization terminal configured to initiate, to the TSP based on the URL of the virtual key, the request for invoking the virtual key, encrypt, with specified parameters generated randomly, the virtual key returned from the TSP, and send the encrypted virtual key to a head unit described below;
the head unit configured to read, decrypt and verify the received virtual key, and send an instruction related to the virtual key to an ECU described below if the verification succeeds; and
the ECU configured to execute the instruction related to the virtual key.

Finally, another variant of the system for generating and using a virtual key of a vehicle according to the invention will be described. In this variant, the vehicle owner authorizes a virtual key to himself/herself. In this case, the vehicle owner does not need to carry a physical key when traveling.

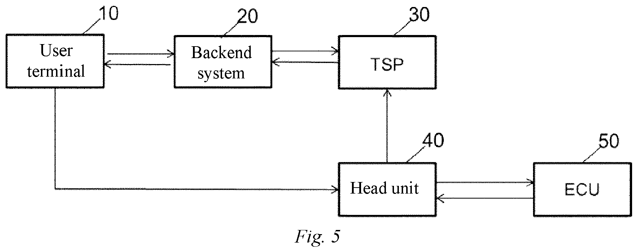

FIG. 5 is a schematic structural diagram of a system for generating and using a virtual key of a vehicle according to a variant that does not fall within the scope of the claims.

As shown in FIG. 5, the system for generating and using a virtual key of a vehicle according to a variant that does not fall within the scope of the claims comprises:
a user terminal 10 configured to generate a request for a virtual key and send the request to a TSP 30 described below via a backend system 20 described below, receive the virtual key returned from the TSP 30 described below via the backend system 20 and encrypt the virtual key, and send the encrypted virtual key to a head unit 40 described below when the virtual key is used;
the backend system 20 configured to transmit data between the user terminal 10 and the TSP 30 described below;
the TSP 30 configured to determine whether the received request for generating the virtual key is valid, generate the virtual key when the request is valid, and return the virtual key to the user terminal 10;
the head unit 40 configured to read, decrypt and verify the received virtual key, and send an instruction related to the virtual key to an ECU 50 described below if the verification succeeds; and
the ECU 50 configured to execute the instruction related to the virtual key.

As described above, the method and system for generating and using a virtual key of a vehicle according to the invention can have the following advantages:
(1) basic information (permission, authorized object, remaining user information, and vehicle information) of a key is signed and issued by a TSP, wherein the basic information is first signed by the TSP and then delivered to an authorization terminal or a user terminal in advance, so that a mobile terminal cannot tamper the basic information and does not rely on a network during an unlocking process;
(2) in communication between the mobile terminal and a head unit, data is encrypted with a symmetric encryption algorithm, and then the key encrypted symmetrically is encrypted with an asymmetric encryption algorithm, which greatly improves an arithmetic speed while ensuring security;
(3) when the mobile terminal transmits data, mobile phone device information comprising a time stamp and a device number is added, and the head unit checks freshness of the time stamp to prevent replay attacks;
(4) the head unit decrypts the received data with a preset private key of the asymmetric encryption algorithm to obtain a key of the symmetric encryption algorithm, then decrypts the whole data with the key, and performs verification, thereby ensuring the security of data, that is, ensuring the security of the virtual key;
(5) virtual keys of people with different identities can be delivered independently and managed separately, the people with different identities may be equipped with different permission lists, and the vehicle owner can also grant different friends different priorities, for example, some friends can watch videos, listen to music and use the address book in the vehicle, but some friends are not allowed, and a service person can also apply to the TSP for corresponding keys under the premise of user authorization, without disturbing the user;
(6) virtual keys of different service persons are configured independently, for example, different virtual keys with different capacities can be assigned for a power charging and swap worker and an express-to-vehicle service, and the time and length of use of the keys can be customized; and
(7) a specific physical transmission channel is not limited, and data is transmitted between the mobile terminal and the head unit in short-distance transmission modes such as NFC and Bluetooth.

The above examples mainly describe the method and system for generating and using a virtual key of a vehicle according to the invention. Although only some specific implementations of the invention are described, a person of ordinary skill in the art should understand that the invention may be implemented in multiple other forms without departing from the scope of the invention Accordingly, the present examples and implementations are considered to be illustrative rather than restrictive, and the invention may encompass various modifications and alterations without departing from the scope of the invention that are defined by the appended claims.

## Claims

1. A method for generating and using a virtual key of a vehicle, which is implemented by a user terminal (100), an authorization terminal (400), a telematics service provider (300), a backend system (200) and an onboard communication control module (500; 600), wherein the method comprises:
an initial presetting step in which relevant keys and/or certificates are preset in the onboard communication control module (500; 600), the user terminal (100) and the telematics service provider (300);
a key generation step in which the user terminal (100) sends, via the backend system (200), a request for generating a virtual key to the telematics service provider (300), the telematics service provider (300) determines whether the request for generating the virtual key is valid, and if the request is valid, an index of the virtual key is returned, via the backend system (200), to the authorization terminal (400) specified by the user terminal (100) or by the telematics service provider (300), the authorization terminal (400) invokes the virtual key from the telematics service provider (300) based on the index of the virtual key, the telematics service provider (300) verifies the invocation information from the authorization terminal (400), and if the verification succeeds, the telematics service provider (300) generates the virtual key, and returns the generated virtual key to the authorization terminal (400);
a key encryption step in which the authorization terminal (400) randomly generates specified parameters, encrypts the virtual key based on the specified parameters, and sends the encrypted virtual key to the onboard communication control module (500; 600) arranged in the vehicle; and
a key verification and execution step in which the onboard communication control module (500; 600) reads, decrypts and verifies the virtual key, and executes an instruction related to the virtual key when the verification succeeds.

2. The method for generating and using a virtual key of a vehicle of claim 1, wherein
in the initial presetting step, an onboard communication control module (500; 600) of each vehicle is preset with an independent private key of the vehicle and a public key,
the user terminal (100) is preset with a user equipment certificate and a token, and
the telematics service provider (300) is preset with a public key for all vehicle certificates and certificates for data signing.

3. The method for generating and using a virtual key of a vehicle of claim 1 or 2, wherein the key generation step comprises the following sub-steps:
sending, by the user terminal (100), the request for generating the virtual key to the backend system (200);
sending, by the backend system (200), the request for generating the virtual key to the telematics service provider (300) after receiving the request for generating the virtual key;
determining, by the telematics service provider (300), whether the request from the backend system (200) is valid, generating a unique authorization ID if the request is valid, and feeding back the authorization ID and the index of the virtual key to the authorization terminal (400) via the backend system (200);
invoking, by the authorization terminal (400), the virtual key from the telematics service provider (300) based on the authorization ID and the index of the virtual key; and verifying, by the telematics service provider (300), the invocation information from the authorization terminal (400), generating the virtual key if the verification succeeds, and returning the generated virtual key to the authorization terminal (400).

4. The method for generating and using a virtual key of a vehicle of any of claims 1 and 2, wherein the key encryption step comprises:
randomly generating, by the authorization terminal (400), an AES key and an initial vector;
encrypting the AES key and the initial vector with the public key based on an ECC algorithm, and encrypting access information, a signature of the access information, and a certificate of the virtual key with the AES key and the initial vector;
acquiring an apparatus ID and a time stamp t1 of the authorization terminal (400), and signing the information with a preset user equipment certificate and token; and
sending the signed information to the onboard communication control module (500; 600).

5. The method for generating and using a virtual key of a vehicle of claim 4, wherein the key verification and execution step comprises the following sub-steps:
a first sub-step of in which the onboard communication control module (500; 600) reads, decrypts and verifies the virtual key;
a second sub-step in which the onboard communication control module (500; 600) performs a related operation based on the instruction related to the virtual key when the verification succeeds; and
a third sub-step in which the onboard communication control module (500; 600) reports an instruction result to the telematics service provider (300) and the user terminal (100).

6. The method for generating and using a virtual key of a vehicle of claim 5, wherein the first sub-step comprises:
(1) reading the time stamp t1, acquiring a current time stamp t2, and determining whether a difference between t1 and t2 is less than a maximum clock synchronization error;
(2) reading signed encryption data;
(3) performing decryption with a private key preset in the onboard communication control module (500; 600) to acquire the AES key and the initial vector;
(4) decrypting the virtual key with the AES key and initial vector to obtain the access information, the signature of the access information, and the certificate of the virtual key;
(5) verifying the certificate of the virtual key and the access information; and
(6) verifying the signature of the above information and the signature of the access information with the public key.

7. The method for generating and using a virtual key of a vehicle of claim 6, wherein said "verifying the certificate of the virtual key and the access information" comprises:
verifying a valid time of the certificate of the virtual key;
verifying whether the vehicle ID in the access information is consistent with a preset vehicle ID; and
verifying whether the device ID in the access information is consistent with a preset device ID.

8. A system for generating and using a virtual key of a vehicle, wherein the system comprises:
a user terminal (100) configured to generate a request for a virtual key and send the request to a telematics service provider (300) via a backend system (200);
the backend system (200) configured to transmit data among the user terminal (100), an authorization terminal (400) and the telematics service provider (300);
the telematics service provider (300) configured to determine whether the received request for generating the virtual key is valid, generate an index of the virtual key when it is determined that the request is valid, and send the index of the virtual key to the authorization terminal (400) via the backend system (200), and also configured to verify a request for invoking the virtual key from the authorization terminal (400), generate the virtual key when the verification succeeds, and return the virtual key to the authorization terminal (400);
the authorization terminal (400) configured to initiate, to the telematics service provider (300) based on the index of the virtual key, the request for invoking the virtual key, encrypt, with specified parameters generated randomly, the virtual key returned from the telematics service provider (300), and send the encrypted virtual key to an onboard communication control module (500; 600); and
the onboard communication control module (500; 600) configured to read, decrypt and verify the received virtual key, and execute an instruction related to the virtual key when the verification succeeds.

9. The system for generating and using a virtual key of a vehicle of claim 8, wherein
the onboard communication control module (500; 600) is preset with an independent private key of each vehicle and a public key,
the user terminal (100) is preset with a user equipment certificate and a token, and
the telematics service provider (300) is preset with a public key for all vehicle certificates and certificates.

10. The system for generating and using a virtual key of a vehicle of claim 9, wherein
when generating the virtual key, the telematics service provider (300) is configured to sign at least a user ID, a vehicle ID, a device ID, an access mode, and an authorized list with the public key.

11. The system for generating and using a virtual key of a vehicle of claim 9, wherein
the authorization terminal (400) is configured to randomly generate an AES key and an initial vector when encrypting the virtual key, encrypt the AES key and the initial vector with the public key based on an ECC algorithm, encrypt access information, a signature of the access information, and a certificate of the virtual key with the AES key and the initial vector, acquire an apparatus ID and a time stamp t1 of the authorization terminal (400), and sign the information with a preset user equipment certificate and token.

12. The system for generating and using a virtual key of a vehicle of claim 9, wherein
when decrypting and verifying the received virtual key, the onboard communication control module (500; 600) is configured to read the time stamp t1, acquire a current time stamp t2, and verify the virtual key only when it is determined that a difference between t1 and t2 is less than a maximum clock synchronization error.

13. The system for generating and using a virtual key of a vehicle of claim 8, wherein the authorization terminal (400) is specified by the telematics service provider (300).

## Patentansprüche

1. Verfahren zur Erzeugung und Verwendung eines virtuellen Farzeugschlüssels, das von einem Benutzerendgerät (100), einem Autorisierungsendgerät (400), einem Telematikdienstanbieter (300), einem Backend-System (200) und einem Bordkommunikationssteuermodul (500, 600) implementiert wird, wobei das Verfahren umfasst:
einen initialen Voreinstellungsschritt, in dem relevante Schlüssel und/oder Zertifikate in dem Bordkommunikationssteuermodul (500, 600), dem Benutzerendgerät (100) und bei dem Telematikdienstanbieter (300) voreingestellt werden;
einen Schlüsselerzeugungsschritt, in dem das Benutzerendgerät (100) über das Backend-System (200) eine Anforderung zum Erzeugen eines virtuellen Schlüssels an den Telematikdienstanbieter (300) sendet, wobei der Telematikdienstanbieter (300) bestimmt, ob die Anforderung für das Erzeugen des virtuellen Schlüssels gültig ist und, wenn die Anforderung gültig ist, ein Index des virtuellen Schlüssels über das Backend-System (200) an das vom Benutzerendgerät (100) oder dem Telematikdienstanbieter (300) vorgegebene Autorisierungsendgerät (400) zurückgegeben wird, das Autorisierungsendgerät (400) den virtuellen Schlüssel von dem Telematikdienstanbieter (300) basierend auf dem Index des virtuellen Schlüssels aufruft, der Telematikdienstanbieter (300) die Aufrufinformation von dem Autorisierungsendgerät (400) überprüft und, wenn die Überprüfung erfolgreich ist, der Telematikdienstanbieter (300) den virtuellen Schlüssel erzeugt und den erzeugten virtuellen Schlüssel an das Autorisierungsendgerät (400) zurückgibt;
einen Schlüsselverschlüsselungsschritt, in dem das Autorisierungsendgerät (400) vorgegebene Parameter zufällig erzeugt, den virtuellen Schlüssel basierend auf den vorgegebenen Parametern verschlüsselt und den verschlüsselten virtuellen Schlüssel an das in dem Fahrzeug angeordnete Bordkommunikationssteuermodul (500, 600) sendet; und
einen Schlüsselüberprüfungs- und -Ausführungsschritt, bei dem das Bordkommunikationssteuermodul (500, 600) den virtuellen Schlüssel liest, entschlüsselt und überprüft und eine Anweisung bezüglich des virtuellen Schlüssels ausführt, wenn die Überprüfung erfolgreich ist.

2. Verfahren zur Erzeugung und Verwendung eines virtuellen Fahrzeugschlüssels nach Anspruch 1, wobei
im initialen Voreinstellungsschritt ein Bordkommunikationssteuermodul (500, 600) jedes Fahrzeugs mit einem unabhängigen privaten Fahrzeugschlüssel und einem öffentlichen Schlüssel voreingestellt wird,
das Benutzerendgerät (100) mit einem Benutzergerätzertifikat und einem Token voreingestellt wird, und
der Telematikdienstanbieter (300) mit einem öffentlichen Schlüssel für alle Fahrzeugzertifikate und Zertifikaten für die Datensignierung voreingestellt wird.

3. Verfahren zur Erzeugung und Verwendung eines virtuellen Fahrzeugschlüssels nach Anspruch 1 oder 2, wobei der Schlüsselerzeugungsschritt die folgenden Teilschritte umfasst:
Senden, durch das Benutzerendgerät (100), der Anforderung zum Erzeugen des virtuellen Schlüssels an das Backend-System (200);
Senden, durch das Backend-System (200), der Anforderung zum Erzeugen des virtuellen Schlüssels an den Telematikdienstanbieter (300), nachdem die Anforderung zum Erzeugen des virtuellen Schlüssels empfangen wurde;
Bestimmen, durch den Telematikdienstanbieter (300), ob die Anforderung von dem Backend-System (200) gültig ist, Erzeugen einer eindeutigen Autorisierungs-ID, wenn die Anforderung gültig ist, und Rückmelden der Autorisierungs-ID und des Index des virtuellen Schlüssels an das Autorisierungsendgerät (400) über das Backend-System (200);
Aufrufen, durch das Autorisierungsendgerät (400), des virtuellen Schlüssels von dem Telematikdienstanbieter (300) basierend auf der Autorisierungs-ID und dem Index des virtuellen Schlüssels; und
Überprüfen, durch den Telematikdienstanbieter (300), der Aufrufinformation von dem Autorisierungsendgerät (400), Erzeugen des virtuellen Schlüssels, wenn die Überprüfung erfolgreich ist, und Zurückgeben des erzeugten virtuellen Schlüssels an das Autorisierungsendgerät (400).

4. Verfahren zur Erzeugung und Verwendung eines virtuellen Fahrzeugschlüssels nach einem der Ansprüche 1 und 2, wobei der Schlüsselverschlüsselungsschritt umfasst:
zufälliges Erzeugen, durch das Autorisierungsendgerät (400), eines AES-Schlüssels und eines Anfangsvektors;
Verschlüsseln des AES-Schlüssels und des Anfangsvektors mit dem öffentlichen Schlüssel basierend auf einem ECC-Algorithmus und Verschlüsseln der Zugangsinformation, einer Signatur der Zugangsinformation und eines Zertifikats des virtuellen Schlüssels mit dem AES-Schlüssel und dem Anfangsvektor;
Erfassen einer Geräte-ID und eines Zeitstempels t1 des Autorisierungsendgeräts (400) und Signieren der Information mit einem voreingestellten Benutzergerätzertifikat und Token; und
Senden der signierten Information an das Bordkommunikationssteuermodul (500, 600).

5. Verfahren zur Erzeugung und Verwendung eines virtuellen Fahrzeugschlüssels nach Anspruch 4, wobei der Schlüsselüberprüfungs- und Ausführungsschritt die folgenden Teilschritte umfasst:
einen ersten Teilschritt, in dem das Bordkommunikationssteuermodul (500, 600) den virtuellen Schlüssel liest, entschlüsselt und überprüft;
einen zweiten Teilschritt, in dem das Bordkommunikationssteuermodul (500, 600) eine zugehörige Operation basierend auf der Anweisung bezüglich des virtuellen Schlüssels durchführt, wenn die Überprüfung erfolgreich ist; und
einen dritten Teilschritt, in dem das Bordkommunikationssteuermodul (500, 600) ein Anweisungsergebnis an den Telematikdienstanbieter (300) und das Benutzerendgerät (100) meldet.

6. Verfahren zur Erzeugung und Verwendung eines virtuellen Fahrzeugschlüssels nach Anspruch 5, wobei der erste Teilschritt umfasst:
(1) Lesen des Zeitstempels t1, Erfassen eines aktuellen Zeitstempels t2 und Bestimmen, ob eine Differenz zwischen t1 und t2 kleiner als ein maximaler Taktsynchronisationsfehler ist;
(2) Lesen der signierten Verschlüsselungsdaten;
(3) Durchführen der Entschlüsselung mit einem privaten Schlüssel, der in dem Bordkommunikationssteuermodul (500, 600) voreingestellt ist, um den AES-Schlüssel und den Anfangsvektor zu erfassen;
(4) Entschlüsseln des virtuellen Schlüssels mit dem AES-Schlüssel und Anfangsvektor, um die Zugangsinformation, die Signatur der Zugangsinformation und das Zertifikat des virtuellen Schlüssels zu erhalten;
(5) Überprüfen des Zertifikats des virtuellen Schlüssels und der Zugangsinformation; und
(6) Überprüfen der Signatur der vorstehenden Informationen und der Signatur der Zugangsinformation mit dem öffentlichen Schlüssel.

7. Verfahren zur Erzeugung und Verwendung eines virtuellen Fahrzeugschlüssels nach Anspruch 6, wobei das "Überprüfen des Zertifikats des virtuellen Schlüssels und der Zugangsinformation" umfasst:
Überprüfen einer Gültigkeitsdauer des Zertifikats des virtuellen Schlüssels;
Überprüfen, ob die Fahrzeug-ID in der Zugangsinformation mit einer voreingestellten Fahrzeug-ID übereinstimmt; und
Überprüfen, ob die Geräte-ID in der Zugangsinformation mit einer voreingestellten Geräte-ID übereinstimmt.

8. System zur Erzeugung und Verwendung eines virtuellen Fahrzeugschlüssels, wobei das System umfasst:
ein Benutzerendgerät (100), das konfiguriert ist, eine Anforderung für einen virtuellen Schlüssel zu erzeugen und die Anforderung über ein Backend-System (200) an einen Telematikdienstanbieter (300) zu senden;
das Backend-System (200), das konfiguriert ist, Daten zwischen dem Benutzerendgerät (100), einem Autorisierungsendgerät (400) und dem Telematikdienstanbieter (300) zu übertragen;
den Telematikdienstanbieter (300), der konfiguriert ist, zu bestimmen, ob die empfangene Anforderung zum Erzeugen des virtuellen Schlüssels gültig ist, einen Index des virtuellen Schlüssels zu erzeugen, wenn bestimmt wird, dass die Anforderung gültig ist, und den Index des virtuellen Schlüssels an das Autorisierungsendgerät (400) über das Backend-System (200) zu senden, und zudem konfiguriert ist, um eine Anforderung zum Aufrufen des virtuellen Schlüssels von dem Autorisierungsendgerät (400) zu überprüfen, den virtuellen Schlüssel zu erzeugen, wenn die Überprüfung erfolgreich ist, und den virtuellen Schlüssel an das Autorisierungsendgerät (400) zurückzugeben;
das Autorisierungsendgerät (400), das so konfiguriert ist, dass es basierend auf dem Index des virtuellen Schlüssels, die Anforderung zum Aufrufen des virtuellen Schlüssels an den Telematikdienstanbieter (300) initiiert, dass es den virtuellen Schlüssel, der von dem Telematikdienstanbieter (300) zurückgegeben wird, mit vorgegebenen, zufällig erzeugten Parametern verschlüsselt und dass es den verschlüsselten virtuellen Schlüssel an ein Bordkommunikationssteuermodul (500, 600) sendet; und
das Bordkommunikationssteuermodul (500, 600), das konfiguriert ist, den empfangenen virtuellen Schlüssel zu lesen, zu entschlüsseln und zu überprüfen und eine Anweisung bezüglich des virtuellen Schlüssels auszuführen, wenn die Überprüfung erfolgreich ist.

9. System zur Erzeugung und Verwendung eines virtuellen Fahrzeugschlüssels nach Anspruch 8, wobei
das Bordkommunikationssteuermodul (500, 600) mit einem unabhängigen privaten Schlüssel jedes Fahrzeugs und einem öffentlichen Schlüssel voreingestellt ist,
das Benutzerendgerät (100) mit einem Benutzergerätzertifikat und einem Token voreingestellt ist und der Telematikdienstanbieter (300) mit einem öffentlichen Schlüssel für alle Fahrzeugzertifikate und Zertifikate voreingestellt ist.

10. System zur Erzeugung und Verwendung eines virtuellen Fahrzeugschlüssels nach Anspruch 9, wobei
der Telematikdienstanbieter (300) konfiguriert ist, beim Erzeugen des virtuellen Schlüssels mindestens eine Benutzer-ID, eine Fahrzeug-ID, eine Geräte-ID, einen Zugriffsmodus und eine autorisierte Liste mit dem öffentlichen Schlüssel zu signieren.

11. System zur Erzeugung und Verwendung eines virtuellen Fahrzeugschlüssels nach Anspruch 9, wobei
das Autorisierungsendgerät (400) konfiguriert ist, einen AES-Schlüssel und einen Anfangsvektor beim Verschlüsseln des virtuellen Schlüssels zufällig zu erzeugen, den AES-Schlüssel und den Anfangsvektor mit dem öffentlichen Schlüssel basierend auf einem ECC-Algorithmus zu verschlüsseln, die Zugangsinformation, eine Signatur der Zugriffsinformation und ein Zertifikat des virtuellen Schlüssels mit dem AES-Schlüssel und dem Anfangsvektor zu verschlüsseln, eine Geräte-ID und einen Zeitstempel t1 des Autorisierungsendgeräts (400) zu erfassen und die Informationen mit einem voreingestellten Benutzergerätzertifikat und Token zu signieren.

12. System zur Erzeugung und Verwendung eines virtuellen Fahrzeugschlüssels nach Anspruch 9, wobei das Bordkommunikationssteuermodul (500, 600) konfiguriert ist, beim Entschlüsseln und Überprüfen des empfangenen virtuellen Schlüssels den Zeitstempel t1 zu lesen und einen aktuellen Zeitstempel t2 zu erfassen, und den virtuellen Schlüssel nur zu überprüfen, wenn bestimmt wird, dass eine Differenz zwischen t1 und t2 kleiner als ein maximaler Taktsynchronisationsfehler ist.

13. System zur Erzeugung und Verwendung eines virtuellen Fahrzeugschlüssels nach Anspruch 8, wobei das Autorisierungsendgerät (400) durch den Telematikdienstanbieter (300) vorgegeben wird.

## Revendications

1. Procédé de génération et d'utilisation d'une clé virtuelle d'un véhicule, lequel est mis en œuvre par un terminal utilisateur (100), un terminal d'autorisation (400), un fournisseur de services télématiques (300), un système dorsal de traitement (200) et un module de commande de communication embarqué (500 ; 600), le procédé comprenant :
une étape initiale de préréglage au cours de laquelle des clés et/ou certificats pertinents sont préréglés dans le module de commande de communication embarqué (500 ; 600), le terminal utilisateur (100) et le fournisseur de services télématiques (300) ;
une étape de génération de clé au cours de laquelle le terminal utilisateur (100) envoie, via le système dorsal de traitement (200), une demande de génération d'une clé virtuelle au fournisseur de services télématiques (300), le fournisseur de services télématiques (300) détermine que la demande de génération de la clé virtuelle est valide ou non, et, si la demande est valide, un indice de la clé virtuelle est renvoyé, via le système dorsal de traitement (200), au terminal d'autorisation (400) spécifié par le terminal utilisateur (100) ou par le fournisseur de services télématiques (300), le terminal d'autorisation (400) appelle la clé virtuelle auprès du fournisseur de services télématiques (300) en fonction de l'indice de la clé virtuelle, le fournisseur de services télématiques (300) vérifie les informations d'appel provenant du terminal d'autorisation (400), et si la vérification réussit, le fournisseur de services télématiques (300) génère la clé virtuelle et renvoie la clé virtuelle générée au terminal d'autorisation (400) ;
une étape de cryptage de clé au cours de laquelle le terminal d'autorisation (400) génère de manière aléatoire des paramètres spécifiés, crypte la clé virtuelle en fonction des paramètres spécifiés et envoie la clé virtuelle cryptée au module de commande de communication embarqué (500 ; 600) disposé dans le véhicule ; et
une étape de vérification et d'exécution de clé au cours de laquelle le module de commande de communication embarqué (500 ; 600) lit, décrypte et vérifie la clé virtuelle, et exécute une instruction liée à la clé virtuelle lorsque la vérification réussit.

2. Procédé de génération et d'utilisation d'une clé virtuelle d'un véhicule selon la revendication 1, dans lequel
dans l'étape de préréglage initiale, un module de commande de communication embarqué (500; 600) de chaque véhicule est préréglé avec une clé privée indépendante du véhicule et une clé publique,
le terminal utilisateur (100) est préréglé avec un certificat d'équipement utilisateur et un jeton, et
le fournisseur de services télématiques (300) est préréglé avec une clé publique pour tous les certificats de véhicule et des certificats pour la signature de données.

3. Procédé de génération et d'utilisation d'une clé virtuelle d'un véhicule selon la revendication 1 ou 2, dans lequel l'étape de génération de clé comprend les sous-étapes suivantes :
l'envoi, par le terminal utilisateur (100), de la demande de génération de la clé virtuelle au système dorsal de traitement (200) ;
l'envoi, par le système dorsal de traitement (200), de la demande de génération de clé virtuelle au fournisseur de services télématiques (300) après la réception de la demande de génération de la clé virtuelle ;
la détermination, par le fournisseur de services télématiques (300), que la demande provenant du système dorsal de traitement (200) est valide ou non, la génération d'un ID d'autorisation unique si la demande est valide et le renvoi de l'ID d'autorisation et de l'indice de la clé virtuelle au terminal d'autorisation (400) via le système dorsal de traitement (200) ;
l'appel, par le terminal d'autorisation (400), de la clé virtuelle auprès du fournisseur de services télématiques (300) en fonction de l'ID d'autorisation et de l'indice de la clé virtuelle ; et la vérification, par le fournisseur de services télématiques (300), des informations d'appel auprès du terminal d'autorisation (400), la génération de la clé virtuelle si la vérification réussit et le renvoi de la clé virtuelle générée au terminal d'autorisation (400).

4. Procédé de génération et d'utilisation d'une clé virtuelle d'un véhicule selon l'une quelconque des revendications 1 et 2, dans lequel
l'étape de cryptage de clé comprend :
la génération de manière aléatoire, par le terminal d'autorisation (400), d'une clé AES et d'un vecteur initial ;
le cryptage de la clé AES et du vecteur initial avec la clé publique suivant un algorithme ECC, et le cryptage d'informations d'accès, d'une signature des informations d'accès et d'un certificat de la clé virtuelle avec la clé AES et le vecteur initial ;
l'acquisition d'un ID d'appareil et d'une estampille temporelle t1 du terminal d'autorisation (400), et la signature des informations avec un certificat d'équipement utilisateur et un jeton préréglés ; et
l'envoi des informations signées au module de commande de communication embarqué (500 ; 600).

5. Procédé de génération et d'utilisation d'une clé virtuelle d'un véhicule selon la revendication 4, dans lequel
l'étape de vérification et d'exécution de clé comprend les sous-étapes suivantes :
une première sous-étape au cours de laquelle le module de commande de communication embarqué (500 ; 600) lit, décrypte et vérifie la clé virtuelle ;
une deuxième sous-étape au cours de laquelle le module de commande de communication embarqué (500 ; 600) réalise une opération connexe basée sur l'instruction relative à la clé virtuelle lorsque la vérification réussit ; et
une troisième sous-étape dans laquelle le module de commande de communication embarqué (500; 600) transmet un résultat d'instruction au fournisseur de services télématiques (300) et à l'utilisateur (100).

6. Procédé de génération et d'utilisation d'une clé virtuelle d'un véhicule selon la revendication 5, dans lequel
la première sous-étape comprend :
(1) la lecture de l'estampille temporelle t1, l'acquisition d'une estampille temporelle actuelle t2 et la détermination qu'une différence entre t1 et t2 est inférieure ou non à une erreur maximale de synchronisation d'horloge ;
(2) la lecture de données de cryptage signées ;
(3) la réalisation d'un décryptage avec une clé privée préréglée dans le module de commande de communication embarqué (500 ; 600) pour acquérir la clé AES et le vecteur initial ;
(4) le décryptage de la clé virtuelle à l'aide de la clé AES et du vecteur initial pour obtenir des informations d'accès, la signature des informations d'accès et le certificat de la clé virtuelle ;
(5) la vérification du certificat de la clé virtuelle et des informations d'accès ; et
(6) la vérification de la signature des informations susmentionnées et de la signature des informations d'accès avec la clé publique.

7. Procédé de génération et d'utilisation d'une clé virtuelle d'un véhicule selon la revendication 6, dans lequel
ladite "vérification du certificat de la clé virtuelle et des informations d'accès" comprend :
la vérification d'un temps valide du certificat de la clé virtuelle ;
la vérification que l'ID de véhicule dans les informations d'accès est cohérente ou non avec un ID de véhicule préréglé ; et
la vérification que l'ID de dispositif dans les informations d'accès est cohérente ou non avec un ID de dispositif préréglé.

8. Système de génération et d'utilisation d'une clé virtuelle d'un véhicule, le système comprenant :
un terminal utilisateur (100) configuré pour générer une demande de clé virtuelle et envoyer la demande à un fournisseur de services télématiques (300) via un système dorsal de traitement (200) ;
le système dorsal de traitement (200) configuré pour transmettre des données entre le terminal utilisateur (100), un terminal d'autorisation (400) et le fournisseur de services télématiques (300) ;
le fournisseur de services télématiques (300) configuré pour déterminer que la demande reçue de génération de la clé virtuelle est valide ou non , générer un indice de la clé virtuelle lorsqu'il est déterminé que la demande est valide et envoyer l'indice de la clé virtuelle au terminal d'autorisation (400) via le système dorsal de traitement (200), et également configuré pour vérifier une demande d'appel de la clé virtuelle à partir du terminal d'autorisation (400), générer la clé virtuelle lorsque la vérification réussit et renvoyer la clé virtuelle au terminal d'autorisation (400) ;
le terminal d'autorisation (400) configuré pour initier, à l'intention du fournisseur de services télématiques (300) en fonction de l'indice de la clé virtuelle, la demande d'appel de la clé virtuelle, crypter, avec des paramètres spécifiés générés de manière aléatoire, la clé virtuelle renvoyée par le fournisseur de services télématiques (300), et envoyer la clé virtuelle cryptée à un module de commande de communication embarqué (500; 600) ; et
le module de commande de communication embarqué (500 ; 600) configuré pour lire, décrypter et vérifier la clé virtuelle reçue, et exécuter une instruction liée à la clé virtuelle lorsque la vérification réussit.

9. Système de génération et d'utilisation d'une clé virtuelle d'un véhicule selon la revendication 8, dans lequel
le module de commande de communication embarqué (500 ; 600) est préréglé avec une clé privée indépendante de chaque véhicule et une clé publique,
le terminal utilisateur (100) est préréglé avec un certificat d'équipement utilisateur et un jeton, et
le fournisseur de services télématiques (300) est préréglé avec une clé publique pour tous les certificats de véhicule et certificats.

10. Système de génération et d'utilisation d'une clé virtuelle d'un véhicule selon la revendication 9, dans lequel
lors de la génération de la clé virtuelle, le fournisseur de services télématiques (300) est configuré pour signer au moins un ID d'utilisateur, un ID de véhicule, un ID de dispositif, un mode d'accès et une liste autorisée avec la clé publique.

11. Système de génération et d'utilisation d'une clé virtuelle d'un véhicule selon la revendication 9, dans lequel
le terminal d'autorisation (400) est configuré pour générer de manière aléatoire une clé AES et un vecteur initial lors du cryptage de la clé virtuelle, crypter la clé AES et le vecteur initial avec la clé publique selon un algorithme ECC, crypter des informations d'accès, une signature des informations d'accès et un certificat de la clé virtuelle avec la clé AES et le vecteur initial, acquérir un ID d'appareil et une estampille temporelle t1 du terminal d'autorisation (400), et signer les informations avec un certificat d'équipement utilisateur et un jeton préréglés.

12. Système de génération et d'utilisation d'une clé virtuelle d'un véhicule selon la revendication 9, dans lequel,
lors du décryptage et de la vérification de la clé virtuelle reçue, le module de commande de communication embarqué (500 ; 600) est configuré pour lire l'estampille temporelle t1, acquérir une estampille temporelle actuelle t2 et vérifier la clé virtuelle uniquement lorsqu'il est déterminé qu'une différence entre t1 et t2 est inférieure à une erreur de synchronisation d'horloge maximale.

13. Système de génération et d'utilisation d'une clé virtuelle d'un véhicule selon la revendication 8, dans lequel le terminal d'autorisation (400) est spécifié par le fournisseur de services télématiques (300).
